# FASCICULE DE BREVET EUROPEEN

(11) **EP 0 936 398 B1**
(45) Date de publication et mention de la délivrance du brevet: **28.04.2004**
(21) Numéro de dépôt: 99400274.9
(22) Date de dépôt: 05.02.1999
(51) Int. Cl.: F16P 1/02, G01M 1/02

(54) **Organe de protection rabattable et équilibreuse de roue le comportant**
Schwenkbare Schutzvorrichtung und diese aufweisende Radauswuchtvorrichtung
Pivotable safety device and wheel balancer comprising same

(30) Priorité: 12.02.1998 FR 9801711
(43) Date de publication de la demande: 18.08.1999
(73) Titulaire: FACOM, 91420 Morangis (FR)
(72) Inventeur: Rapidel, Jean-Loup, 27730 Bueil (FR); Delieuvin, Bruno, 27930 Angerville la Campagne (FR)
(74) Mandataire: Blot, Philippe Robert Emile

(56) Documents cités:
- EP-A- 0 358 496
- FR-A- 2 739 691

## Description

La présente invention concerne un organe de protection rétractable d'un mécanisme à protéger porté par un bâti, du type comportant un capot rigide rabattable entre une position active de protection du mécanisme et une position escamotée, lequel capot est porté par un bras articulé sur le bâti.

Elle concerne en outre une équilibreuse de roue.

Une équilibreuse de roue de véhicule, dite stationnaire ou à roue démontée, se compose d'un bâti rigide généralement en tôle d'acier sur lequel sont montés, des moyens de contrôle de l'équilibrage comportant essentiellement un arbre de mesure entraîné en rotation par un moteur.

L'extrémité de l'arbre comporte des moyens de fixation de la roue à équilibrer. L'arbre moteur, muni de capteurs d'efforts, sert également de corps d'épreuve. Ce dernier est utilisé pour mesurer les efforts engendrés lors de la rotation de la roue.

Les capteurs d'efforts portés par le corps d'épreuve sont reliés à un calculateur, lequel détermine les masses de compensation à ajouter à la roue.

Dans les équilibreuses de roue, l'arbre s'étend horizontalement et fait saillie latéralement par rapport au bâti. La roue est ainsi montée sur un côté du bâti.

Afin d'assurer la protection de l'opérateur contre la rotation de la roue elle-même, ou la projection d'éventuelles particules solides ou liquides éjectées lors de la rotation de la roue, il est connu de prévoir un capot rabattable, recouvrant notamment la partie supérieure de la roue.

Ce capot constitue également une barrière interdisant à l'opérateur d'intervenir sur la roue pendant sa mise en rotation.

La nécessité d'accéder à la roue, lorsque celle-ci est à l'arrêt pour sa mise en place ou son retrait, impose la possibilité d'escamoter le capot, notamment par basculement.

Ainsi, il est connu d'articuler horizontalement le capot sur le panneau arrière du bâti. Le capot ayant une forme arquée , celui-ci est relativement encombrant.

En conséquence, un espace suffisant doit être réservé en arrière de la machine, pour permettre le basculement du capot vers sa position escamotée.

L'équilibreuse ne peut alors pas être adossée à un mur, ou installée dans son voisinage immédiat.

Le document FR-A-2 739 691 décrit une équilibreuse de roue proposant une solution à ce problème d'encombrement.

Dans cette équilibreuse, le capot est porté par un bras monté oscillant sur le bâti de l'équilibreuse. Afin de réduire l'encombrement de la partie déplaçable du capot, celui-ci est réalisé en deux parties. Une première partie est fixée à demeure sur l'équilibreuse et seule la seconde partie est déplaçable en étant portée par le bras articulé.

Ce type d'équilibreuse est complexe à fabriquer, puisqu'il nécessite un nombre élevé de pièces. De plus, la première partie du capot ne peut pas être déplacée pour permettre d'accéder à la roue.

L'invention a pour but de proposer une solution alternative au problème de l'encombrement de l'organe de protection rabattable d'une équilibreuse de roue, lorsque celui-ci est en position escamotée.

A cet effet, l'invention a pour objet un organe de protection d'un mécanisme à protéger, porté par un bâti du type précité, caractérisé en ce que le capot est articulé sur le bras autour d'un axe sensiblement parallèle à l'axe d'articulation du bras sur le bâti, et en ce qu'il comporte un appui glissant adapté pour coopérer avec le capot, au moins temporairement lors du mouvement du bras, pour maintenir le capot écarté du mécanisme à protéger.

Suivant le mode particulier de réalisation, l'organe de protection comporte les caractéristiques suivantes :
- la distance séparant l'axe d'articulation du bras sur le bâti, de l'axe d'articulation du capot sur le bras, est supérieure à la distance séparant l'axe d'articulation du bras sur le bâti, de l'appui glissant coopérant avec le capot;
- le capot comporte au moins une butée adaptée pour coopérer avec le bras pour limiter le débattement angulaire entre le capot et le bras;
- le bras comporte un cadre de protection délimitant une zone de réception du mécanisme à protéger, lequel cadre s'étend dans un plan sensiblement parallèle à l'axe d'articulation du bras sur le bâti;
- le cadre est polygonal, le capot est articulé autour d'un côté du cadre;
- la longueur totale du capot mesurée perpendiculairement à son axe d'articulation sur le cadre est inférieure à la longueur correspondante de la zone délimitée par le cadre, de sorte que le capot est susceptible de passer au moins partiellement au travers du cadre;
- l'appui glissant est porté par un montant comportant des moyens de fixation, sans possibilité de mouvement, sur le bâti;
- le montant portant l'appui glissant est adapté pour être engagé au travers du cadre;
- le montant et le cadre sont conformés pour, qu'en position active de protection du capot, le cadre est en appui sur le montant, le montant constituant une butée limitant le débattement angulaire du bras par rapport au bâti;
- le montant et le cadre sont conformés pour, qu'en position escamotée du capot, le cadre est en appui sur le montant, le montant constituant une butée limitant le débattement angulaire du bras par rapport au bâti;
- le montant a une forme générale en équerre, dont une première branche comporte à son extrémité les moyens de fixation sur le bâti, et dont l'autre branche comporte des moyens d'appui glissant adaptés pour coopérer avec le capot; et
- les moyens d'appui glissant comporte au moins un galet et le capot comporte une piste pour le roulement du ou de chaque galet.

L'invention a en outre pour objet une équilibreuse de roue comportant un bâti, des moyens de contrôle de l'équilibrage d'une roue à axe sensiblement horizontal et, fixé au bâti, un organe de protection de la roue tel que défini ci-dessus.

En variante, le capot a un forme générale arquée, centrée sensiblement suivant l'axe de la roue.

L'invention sera mieux comprise à l'aide de la description qui va suivre, donnée uniquement à titre d'exemple et faite en se référant aux dessins, sur lesquels :
- la Fig.1 est une vue en perspective de trois quarts d'une équilibreuse de roue munie d'un organe de protection selon l'invention, l'organe de protection étant représenté en position active de protection;
- la Fig. 2 est une vue de côté de l'équilibreuse de roue dans la position de la figure 1;
- les Figs.3 et 4 sont des vues de côté de l'équilibreuse, lors des phases successives de basculement de l'organe de protection, depuis sa position active de protection vers sa position escamotée; et
- la Fig.5 est une vue de côté de l'équilibreuse de roue avec l'organe de protection en position escamotée.

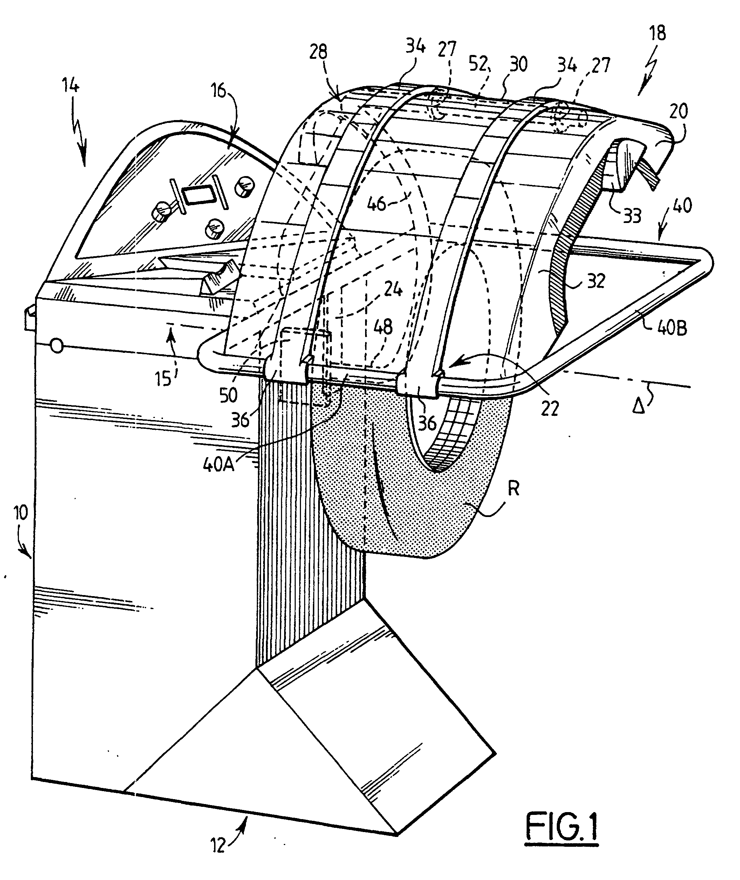

Comme représenté sur les figures 1 à 5, une équilibreuse de roue selon l'invention comporte un bâti de support 10 reposant sur une base élargie appropriée 12 sur lequel, sont montés des moyens 14 de contrôle de l'équilibrage d'une roue R du véhicule.

Ces moyens 14 de contrôle comportent une tête 15 de mesure et d'entraînement en rotation de la roue R, et un pupitre 16 de commande et de contrôle. Ce dernier comporte un écran de dialogue interactif pour recevoir et introduire des signaux de mesure, de commande et de contrôle à la tête 15 de mesure et d'entraînement et indiquer à l'opérateur la suite des opérations.

Un organe 18 de protection rabattable selon l'invention est monté sur le bâti 10 afin d'assurer la protection de la roue.

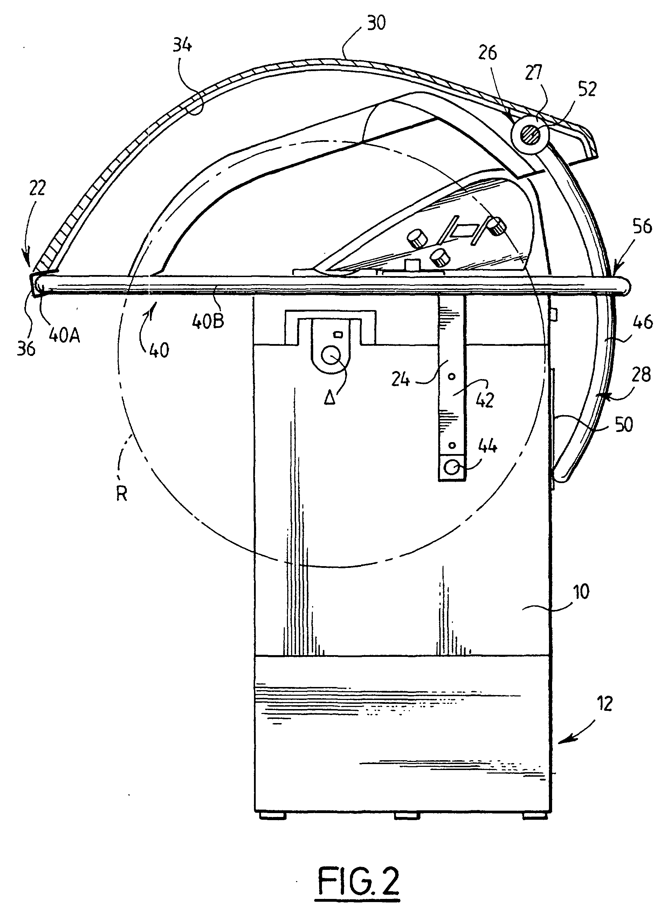

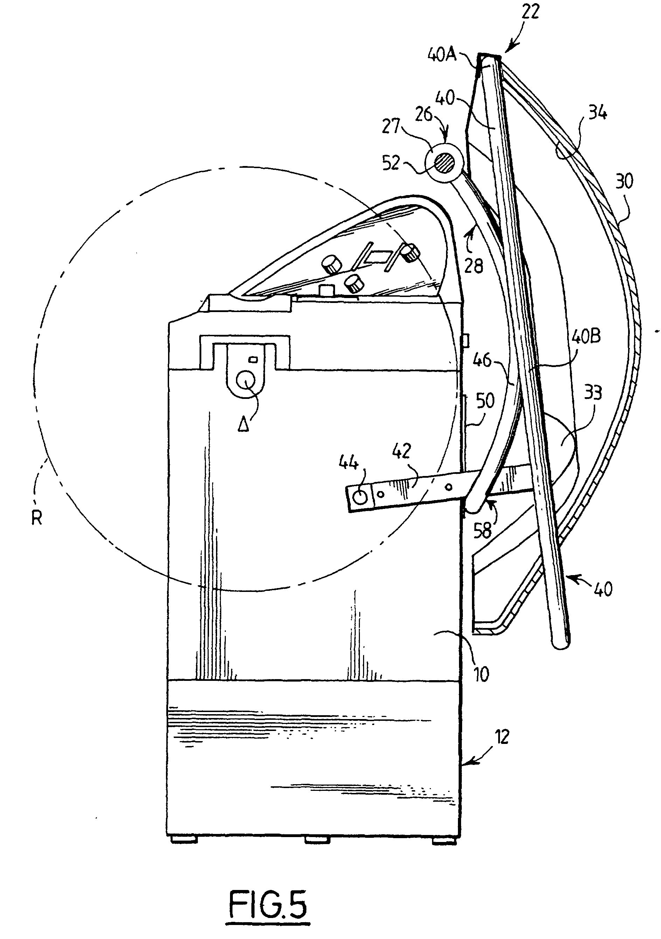

L'organe de protection est déplaçable depuis une position active de protection représentée sur les figures 1 et 2, jusqu'à une position escamotée libérant l'accès à la roue, représentée sur la figure 5.

L'organe de protection 18 comporte un capot 20 articulé à une extrémité 22 sur un bras 24 lui-même articulé sur le bâti 10. Il comporte en outre un appui glissant 26 formé par exemple par des galets 27 portés à l'extrémité d'un montant 28 sensiblement vertical. Cet appui glissant 26 est adapté pour coopérer avec le capot 20 au moins temporairement lors du mouvement du bras 24 et maintenir le capot 20 écarté de la roue R.

Le capot 20, représenté en coupe longitudinale sur les figures 2 à 5 est formé par une coque rigide monobloc formée par exemple en matière plastique thermoformée telle que de l'ABS ou du polystyrène.

Cette coque a une forme générale arquée centrée sensiblement suivant l'axe Δ de rotation de la roue R. Elle comporte un fond cintré 30 bordé par des parois latérales de protection 32. Ces parois comportent chacune une saillie externe 33 formant butée adaptée pour coopérer avec le bras 24.

Des pistes longitudinales 34 de roulement et de guidage des galets 27 sont conformées sur la surface interne du fond 30 et font saillie sur la surface externe de celui-ci.

A son extrémité 22, le capot 20 comporte deux attaches 36 disposées dans le prolongement des pistes 34. Ces attaches 36, venues de matière avec la coque formant le capot, sont adaptées pour assurer un enclenchement élastique du capot 20 sur l'extrémité du bras 24, cet enclenchement permettant l'articulation du capot 20 autour d'un axe parallèle à l'axe Δ de rotation de la roue.

Le bras 24 comporte un cadre polygonal 40, sur lequel est articulé le capot 20 et une barre de support 42 s'étendant perpendiculairement au cadre 40 et qui est articulée sur le bâti 10. La barre 42 est oscillante autour d'un axe 44 s'étendant parallèlement à l'axe de rotation de la roue.

Le cadre 40 est délimité par un tube de section extérieure circulaire délimitant un contour fermé de forme rectangulaire disposé parallèlement à l'axe Δ de la roue R.

Les attaches 36 sont enclenchées élastiquement sur un petit côté, noté 40A, du cadre.

Le grand côté; noté 40B, du cadre a une longueur supérieure à la longueur totale du capot 20, mesurée perpendiculaire à son axe d'articulation 40A.

Le cadre 40 a une largeur interne supérieure à la largeur de la plus grosse roue destinée à être montée sur l'équilibreuse.

Ainsi, le cadre 40 est dimensionné pour permettre le passage du capot et de la roue dans la zone libre délimitée par celui-ci.

Le montant 28 a une forme générale d'équerre. Il comporte une branche principale courbe 46 sensiblement verticale reliée, dans sa partie inférieure, par une patte perpendiculaire 48, à une platine 50 de fixation sur la face arrière du bâti 10.

A son autre extrémité, la branche 46 est prolongée par une branche complémentaire 52 rectiligne s'étendant perpendiculairement. La branche 52 porte les deux galets rotatifs 27, ces derniers étant destinés à être reçus dans les pistes 34 formées sur la face interne du capot 20.

Comme représenté sur les figures, le montant 28 s'étend au travers du cadre 40.

En particulier, comme représenté sur la figure 2, lorsque le capot est en position active de protection, l'extrémité arrière du cadre 40 est en butée contre le montant 28 en un point désigné par 56. Dans cette position, le cadre 40 est en position horizontale et est retenu par son appui sur le montant 28 formant butée.

Dans la position des figures 1 et 2, les galets 27 sont disposés à l'extrémité arrière des voies 34, c'est-à-dire à l'opposé des attaches 36. Le capot 20 est ainsi écarté de la roue R en étant retenu d'une part, par le cadre 40 au niveau de son extrémité 22 où il est articulé, et d'autre part, par son appui sur les galets 27.

Dans cette position, le cadre 40 qui s'étend suivant une corde de la roue R, forme une barrière de protection rendant difficile l'accès à la roue.

Avantageusement, afin de permettre un basculement complet du cadre, la distance séparant l'axe 44 d'articulation du bras 24 sur le bâti 10, de l'axe 40A d'articulation du capot 20 sur le bras 24 est supérieure à la distance séparant l'axe 44 d'articulation du bras 24 sur le bâti 10, de l'appui glissant 26 coopérant avec le capot 20.

Afin de dégager le capot 20, l'opérateur saisit le côté 40A du cadre 40 entre les deux attaches 36. Ce tronçon du cadre 40 constitue une poignée de préhension de l'organe de protection. Le cadre 40 est alors déplacé suivant le sens de la flèche 1.

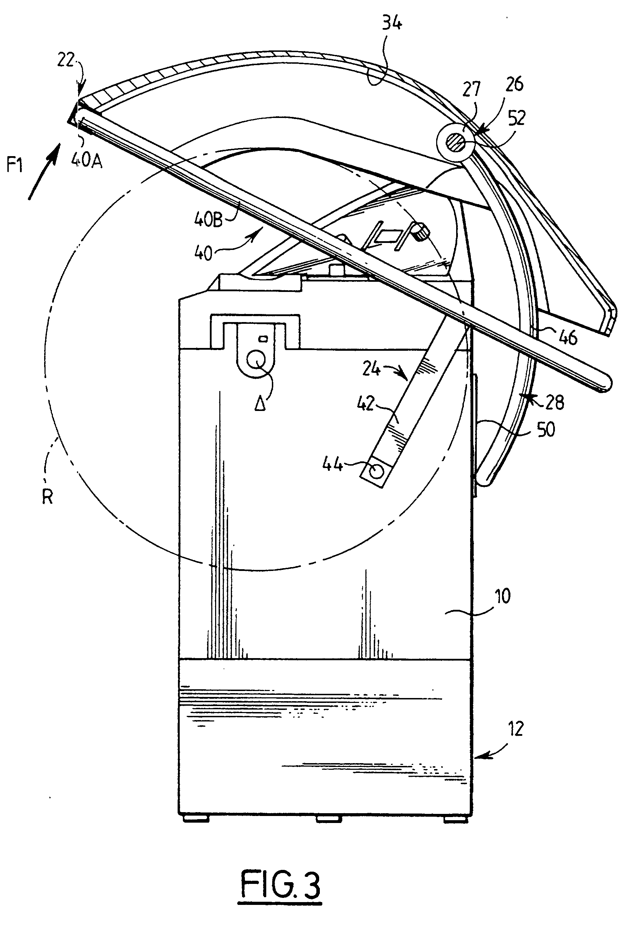

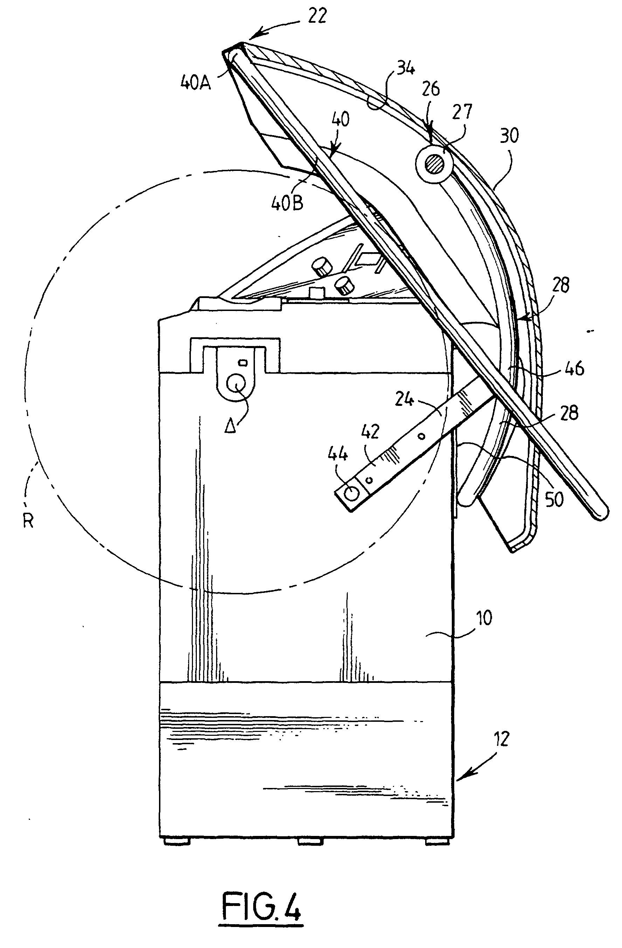

Comme représenté sur les figures 3 et 4, le bras 24, bascule vers l'arrière entraînant avec lui le capot 20 qui roule sur les galets 27 maintenus à une position fixe par rapport au bâti par le montant 28.

La longueur du capot 20 étant inférieure à la longueur interne du cadre 40, celui-ci s'engage à l'intérieur du cadre comme représenté sur la figure 4.

Pendant le basculement de l'organe de protection, le capot 20 est maintenu à distance de la roue R par les galets 27 formant un appui glissant, malgré l'articulation du capot à son extrémité 22 sur le cadre 40.

Sur la figure 5 est représenté le capot dans sa position escamotée.

Cette position est définie par l'appui au point noté 58 de la barre 42 contre la patte fixe 48 du montant formant butée.

Ainsi, le débattement angulaire du bras 24 est limité dans sa position de la figure 2 par l'appui du cadre 40 contre la branche principale 46 du montant, et dans sa position escamotée, par l'appui de la barre 42 contre la patte 48.

Dans la portion escamotée représentée sur la figure 5, le capot 20 n'est plus en contact avec l'appui glissant 26. Dans sa position extrême, il est en appui par l'intermédiaire des butées 33 sur les grands côtés 40B du cadre. Ainsi, le capot 20 est dans une position d'équilibre stable.

On notera qu'avec un tel agencement, la surface externe du capot étant courbe, avec sa concavité tournée vers l'axe Δ de rotation de la roue, et le rayon de courbure du capot étant sensiblement égal à la distance moyenne entre le capot et l'axe Δ de la roue, l'ensemble de l'organe de protection est escamoté dans un espace limité en arrière de l'équilibreuse.

L'agencement qui vient d'être décrit est simple à réaliser, beaucoup des éléments constitutifs exerçant plusieurs fonctions.

En particulier, le montant 28 associé à la patte 48, qui est d'une conception simple, en forme de col de cygne, exerce à la fois une fonction de guidage du capot lors de son évolution, ainsi qu'une fonction de butée définissant ainsi les positions active de protection et escamotée du capot.

Avec un tel agencement, l'axe de rotation 44 du bras portant le capot traverse la face latérale du bâti. Il n'est donc pas nécessaire d'ajouter une équerre extérieure pour supporter le capot.

De plus, l'implantation de cet axe de rotation au niveau du bâti facilite le câblage d'éventuels détecteurs de position pouvant être implantés sur celui-ci afin d'interdire le fonctionnement de l'équilibreuse si le capot n'est pas en position active de réception.

Du fait de la présence de deux articulations, respectivement du bras sur le bâti et du capot sur le bras, les axes d'articulation sont proches de la zone où l'opérateur exerce une force afin de basculer l'organe de protection.

Ainsi, les moments résultant de la force appliquée par l'opérateur sont faibles.

Il n'est donc pas nécessaire d'équilibrer et de compenser le poids du capot qui peut être élevé par des masses ou un ressort antagonique.

En outre, le cadre fermé 40 qui entoure la roue lorsque le capot est en position active de protection, délimite un périmètre de sécurité en interdisant l'accès à la roue et notamment aux organes de retenue de celle-ci qui sont montés au bout de l'arbre et dont les poignées de manoeuvre peuvent être dangereuses.

## Revendications

1. Organe de protection d'un mécanisme (R) à protéger porté par un bâti, du type comportant un capot rigide (20) rabattable entre une position active de protection du mécanisme (R) et une position escamotée, lequel capot (20) est porté par un bras (24) articulé sur le bâti (10), **caractérisé en ce que** le capot (20) est articulé sur le bras (24) autour d'un axe (40A) sensiblement parallèle à l'axe (44) d'articulation du bras (24) sur le bâti (10), et **en ce qu'**il comporte un appui glissant (26) adapté pour coopérer avec le capot (20), au moins temporairement lors du mouvement du bras (24), pour maintenir le capot (20) écarté du mécanisme (R) à protéger.

2. Organe selon la revendication 1, **caractérisé en ce que** la distance séparant l'axe (44) d'articulation du bras (24) sur le bâti (10), de l'axe (40A) d'articulation du capot (20) sur le bras (24), est supérieure à la distance séparant l'axe (44) d'articulation du bras (24) sur le bâti (10), de l'appui glissant (26) coopérant avec le capot (20).

3. Organe de protection selon la revendication 1 ou 2, **caractérisé en ce que** le capot (20) comporte au moins une butée (33) adaptée pour coopérer avec le bras (24) pour limiter le débattement angulaire entre le capot (20) et le bras (24).

4. Organe de protection selon l'une quelconque des revendications précédentes, **caractérisé en ce que** le bras (24) comporte un cadre (40) de protection délimitant une zone de réception du mécanisme à protéger (R), lequel cadre (40) s'étend dans un plan sensiblement parallèle à l'axe (44) d'articulation du bras (24) sur le bâti (10).

5. Organe de protection selon la revendication 4, **caractérisé en ce que** le cadre (40) est polygonal, et **en ce que** le capot (20) est articulé autour d'un côté (40A) du cadre (40).

6. Organe de protection selon la revendication 5, **caractérisé en ce que** la longueur totale du capot (20) mesurée perpendiculairement à son axe (40A) d'articulation sur le cadre (40) est inférieure à la longueur correspondante de la zone délimitée par le cadre (40), de sorte que le capot (20) est susceptible de passer au moins partiellement au travers du cadre (40).

7. Organe de protection selon l'une quelconque des revendications précédentes, **caractérisé en ce que** l'appui glissant (26) est porté par un montant (28) comportant des moyens (50) de fixation, sans possibilité de mouvement, sur le bâti (10).

8. Organe de protection selon la revendication 7, **caractérisé en ce que** le montant (28) portant l'appui glissant (26) est adapté pour être engagé au travers du cadre (40).

9. Organe de protection selon la revendication 8, **caractérisé en ce que** le montant (28) et le cadre (40) sont conformés pour, qu'en position active de protection du capot (20), le cadre (40) est en appui sur le montant (28), le montant (28) constituant une butée limitant le débattement angulaire du bras (24) par rapport au bâti (10).

10. Organe de protection selon la revendication 8 ou 9, **caractérisé en ce que** le montant (28) et le cadre (40) sont conformés pour, qu'en position escamotée du capot (20), le cadre (40) est en appui sur le montant (28), le montant (28) constituant une butée limitant le débattement angulaire du bras (24) par rapport au bâti (10).

11. Organe de protection selon l'une quelconque des revendications 7 à 10, **caractérisé en ce que** le montant (28 ) a une forme générale en équerre, dont une première branche (46) comporte à son extrémité les moyens (50) de fixation sur le bâti (10), et dont l'autre branche (52) comporte des moyens (27) d'appui glissant adaptés pour coopérer avec le capot (20).

12. Organe de protection selon la revendication 11, **caractérisé en ce que** les moyens (26) d'appui glissant comporte au moins un galet (27) et le capot (20) comporte une piste (34) pour le roulement du ou de chaque galet (27).

13. Equilibreuse de roue comportant un bâti (10), des moyens (14) de contrôle de l'équilibrage d'une roue (R) à axe sensiblement horizontal et, fixé au bâti (10), un organe (18) de protection de la roue (R), selon l'une quelconque des revendications précédentes.

14. Equilibreuse selon la revendication 13, **caractérisée en ce que** le capot (20) a un forme générale arquée, centrée sensiblement suivant l'axe de la roue (R).

## Claims

1. Device for protection of a mechanism (R) to be protected borne by a structure, of the type comprising a rigid cover (20) which can be moved between an active position of protecting the mechanism (R) and a retracted position, the said cover being borne by an arm (24) articulated on the structure (10), **characterised in that** the cover (20) is articulated on the arm (24) about a hinge (40A) substantially parallel to the hinge (44) of the arm (24) on the structure (10), and **in that** it comprises a sliding support (26) adapted to co-operate with the cover (20) at least temporarily during the movement of the arm (24) in order to keep the cover (20) spaced from the mechanism (R) to be protected.

2. Device as claimed in Claim 1, **characterised in that** the distance separating the hinge (44) of the arm (24) on the structure (10) from the hinge (40A) of the cover (20) on the arm (24) is greater than the distance separating the hinge (44) of the arm (24) on the structure (10) from the sliding support (26) co-operating with the cover (20).

3. Protecting device as claimed in Claim 1 or 2, **characterised in that** the cover (20) has at least one stop (33) adapted to co-operate with the arm (24) to limit the angular displacement between the cover (20) and the arm (24).

4. Protecting device as claimed in any one of the preceding claims, **characterised in that** the arm (24) has a protecting frame (40) delimiting a zone for receiving the mechanism to be protected (R), the said frame (40) extending in a plane substantially parallel to the hinge (944) of the arm (24) on the structure (10).

5. Protecting device as claimed in Claim 4, **characterised in that** the frame (40) is polygonal, and **in that** the cover is articulated about one side (40A) of the frame (40).

6. Protecting device as claimed in Claim 5, **characterised in that** the total length of the cover (20) measured perpendicular to its hinge (40) on the frame (40) is less than the corresponding length of the zone delimited by the frame (40), so that the cover (20) is capable of passing at least partially through the frame (40).

7. Protecting device as claimed in any one of the preceding claims, **characterised in that** the sliding support (26) is borne by a strut (28) having means (50) for fixing without the possibility of movement on the structure (10).

8. Protecting device as claimed in Claim 7, **characterised in that** the strut (28) bearing the sliding support (26) is adapted to be engaged through the frame (40).

9. Protecting device as claimed in Claim 8, **characterised in that** the strut (28) and the frame (40) are shaped so that, in the active position of protecting the cover (20), the frame (40) rests on the strut (28), the strut (28) constituting a stop limiting the angular displacement of the arm (24) relative to the structure (10).

10. Protecting device as claimed in Claim 8 or 9, **characterised in that** the strut (28) and the frame (40) are shaped so that, in the retracted position of the cover (20), the frame (40) rests on the strut (28), the strut (28) constituting a stop limiting the angular displacement of the arm (24) relative to the structure (10).

11. Protecting device as claimed in any one of Claims 7 to 10, **characterised in that** the strut (28) has a generally right-angled shape, of which a first branch (46) has at its end the means (50) for fixing on the structure (10) and the other branch (52) has sliding support means (27) adapted to co-operate with the cover (20).

12. Protecting device as claimed in Claim 11, **characterised in that** the sliding support means (26) have at least one roller (27) and the cover (20) has a track (34) for the or each roller (27) to run on.

13. Wheel balancer having a frame (10), means (14) for controlling the balancing of a wheel (R) with a substantially horizontal axis and, fixed on the structure (10), a device (18) for protection of the wheel (R), as claimed in any one of the preceding claims.

14. Balancer as claimed in Claim 13, **characterised in that** the cover (20) has a generally arched shape, centred substantially on the axis of the wheel (R).

## Patentansprüche

1. Schutzvorrichtung eines von einem Rahmen getragenen zu schützenden Mechanismus (R) der Bauart mit einer zwischen einer aktiven Schutzposition des Mechanismus (R) und einer aufgeklappten Position schwenkbaren, starren Abdeckhaube (20), wobei die Abdeckhaube (20) von einem Arm (24) getragen wird, der gelenkig an dem Rahmen (10) angebracht ist, **dadurch gekennzeichnet, dass** die Abdeckhaube (20) an dem Arm (24) um eine Achse (40A) gelenkig angebracht ist, die im wesentlichen parallel zur Gelenkachse (44) des Arms (24) an dem Rahmen (10) verläuft, und dass sie eine Gleitstütze (26) enthält, die so ausgelegt ist, dass sie mit der Abdeckhaube (20) wenigstens vorübergehend während der Bewegung des Arms (24) zusammenwirkt, um die Abdeckhaube (20) vom zu schützenden Mechanismus (R) beabstandet zu halten.

2. Vorrichtung nach Anspruch 1, **dadurch gekennzeichnet, dass** der Abstand, der die Gelenkachse (44) des Arms (24) am Rahmen (10) von der Gelenkachse (40A) der Abdeckhaube (20) am Arm (24) trennt, größer ist als der Abstand, der die Gelenkachse (44) des Arms (24) am Rahmen (10) von der Gleitstütze (26) trennt, die mit der Abdeckhaube (20) zusammenwirkt.

3. Schutzvorrichtung nach Anspruch 1 oder 2, **dadurch gekennzeichnet, dass** die Abdeckhaube (20) wenigstens einen Anschlag (33) umfasst, der so ausgelegt ist, dass er mit dem Arm (24) zusammenwirkt, um die Winkelauslenkung zwischen der Abdeckhaube (20) und dem Arm (24) zu begrenzen.

4. Schutzvorrichtung nach irgendeinem der vorhergehenden Ansprüche, **dadurch gekennzeichnet, dass** der Arm (24) einen Schutzrahmen (40) umfasst, der einen Aufnahmebereich des zu schützenden Mechanismus (R) begrenzt, wobei sich der Rahmen (40) in einer im wesentlichen zur Gelenkachse (44) des Arms (24) am Rahmen (10) parallelen Ebene erstreckt.

5. Schutzvorrichtung nach Anspruch 4, **dadurch gekennzeichnet, dass** der Rahmen (40) polygonal ist und dass die Abdeckhaube (20) an einer Seite (40A) des Rahmens (40) gelenkig gehaltert ist.

6. Schutzvorrichtung nach Anspruch 5, **dadurch gekennzeichnet, dass** die Gesamtlänge der Abdeckhaube (20), senkrecht zu ihrer Gelenkachse (40A) auf dem Rahmen (40) gemessen, kleiner ist als die entsprechende Länge des durch den Rahmen (40) begrenzten Bereichs, so dass die Abdeckhaube (20) wenigstens teilweise quer durch den Rahmen (40) hindurchgelangen kann.

7. Schutzvorrichtung nach irgendeinem der vorhergehenden Ansprüche, **dadurch gekennzeichnet, dass** die Gleitstütze (26) von einer Strebe (28) getragen wird, die Befestigungsmittel (50) ohne Bewegungsmöglichkeit auf dem Rahmen (10) umfasst.

8. Schutzvorrichtung nach Anspruch 7, **dadurch gekennzeichnet, dass** die Strebe (28), welche die Gleitstütze (26) trägt, so ausgelegt ist, dass sie durch den Rahmen (40) in Eingriffe gebracht wird.

9. Schutzvorrichtung nach Anspruch 8, **dadurch gekennzeichnet, dass** die Strebe (28) und der Rahmen (40) so ausgelegt sind, dass der Rahmen (40) in aktvier Schutzposition der Abdeckhaube (20) an der Strebe (28) anliegt, wobei die Strebe (28) einen Anschlag bildet, der die Winkelauslenkung des Arms (24) in bezug auf den Rahmen (10) begrenzt.

10. Schutzvorrichtung nach Anspruch 8 oder 9, **dadurch gekennzeichnet, dass** die Strebe (28) und der Rahmen (40) so ausgelegt sind, dass der Rahmen(40) in aufgeklappter Position der Abdeckhaube (20) an der Strebe (28) anliegt, wobei die Strebe (28) einen Anschlag bildet, der die Winkelauslenkung des Arms (24) in bezug auf den Rahmen (10) begrenzt.

11. Schutzvorrichtung nach irgendeinem der Ansprüche 7 bis 10, **dadurch gekennzeichnet, dass** die Strebe (28) eine im allgemeinen dreieckige Form aufweist, deren einer erster Schenkel (46) an seinem Ende die Befestigungsmittel (50) am Rahmen (10) umfasst und deren anderer Schenkel (52) Gleitstützmittel (27) umfasst, die so ausgelegt sind, dass sie mit der Abdeckhaube (20) zusammenwirken.

12. Schutzvorrichtung nach Anspruch 11, **dadurch gekennzeichnet, dass** die Gleitschützmittel (26) wenigstens eine Walze (27) umfassen und die Abdeckhaube (20) eine Bahn (34) für das Rollen der oder jeder Walze (27) umfasst.

13. Radauswuchtvorrichtung, umfassend einen Rahmen (10), Mittel (14) zum Kontrollieren des Auswuchtens eines Rads (R) mit einer im wesentlichen horizontalen Achse und eine am Rahmen (10) befestigte Schutzvorrichtung (18) des Rads (R) gemäß irgendeinem der vorhergehenden Ansprüche.

14. Auswuchtvorrichtung nach Anspruch 13, **dadurch gekennzeichnet, dass** die Abdeckhaube (20) eine allgemein gebogene Form aufweist, die im wesentlichen um die Achse des Rads (R) zentriert ist.
